# EUROPEAN PATENT APPLICATION

(11) **EP 4 764 747 A1**
(43) Date of publication of application: **24.06.2026**
(21) Application number: 24221152.2
(22) Date of filing: 18.12.2024
(51) Int. Cl.: G05B 19/404

(54) **METHOD FOR MANUFACTURING A PATCHING SHEET FOR A CARDBOARD PROCESSING SYSTEM**

(71) Applicant: BOBST MEX SA, 1031 Mex (CH)
(72) Inventor: DE KALBERMATTEN, Alexandre, 1180 Tartegnin (CH)
(74) Representative: Hasler, David

(57) **Abstract**

A method for manufacturing a patching sheet for a pressing station (16) of a cardboard processing machine (11) comprises obtaining a job recipe, the job recipe defining a model layout of creases to be applied in a blank (14) being creased in the cardboard processing machine (11). Then, a blank (14) is creased in the pressing station (16) of the cardboard processing machine (11) based on the model layout to obtain a trial sheet comprising creases, each of the creases in the trial sheet being associated to one of the creases of the model layout. An image of the creases in the trial sheet is measured by an imaging system (28). Based on the measured image, the quality of each crease in the trial sheet is computed to obtain a list of defective creases needing correction. For each defective crease, a thickness of a patch to be applied on the patching sheet for correcting the defective crease is determined to obtain a list of patches; and the patching sheet is built according to the list of patches.

Further, a cardboard processing system (10) is provided.

## Description

The invention relates to a method for manufacturing a patching sheet for a pressing station of a cardboard processing machine and a cardboard processing system.

The process of die-cutting and creasing is fundamental in the manufacturing of cardboard boxes and other packaging materials. Traditionally, this process involves using a die-cutting machine comprising a pressing station equipped with cutting knives and/or creasing rules arranged in a specific layout to cut and/or crease sheets of cardboard, which are known as sheet of 'blanks'. The blanks are the pre-cut and creased boxes ready to be folded and glued and are extracted from the sheet of blanks after cutting and creasing. However, achieving precise cuts and/or creases in the order of tens of micrometers can be challenging due to variations in material properties, machine settings, wear of the knives, creasing rules and/or other parts of the die-cutting machine and other factors which lead to unevenness in the pressing station. As a result, operators often need to perform a process known as 'patching' to correct any defects in the cuts and/or creases.

Patching involves manually adding adhesive strips, also called `patches', of varying thicknesses to specific areas of the die-cutting tool by preparing a patching sheet which is then placed in the pressing station to compensate for any deficiencies. The patches locally increase the thickness of the setup and thus compensate for the unevenness in the pressing station. This manual process is time-consuming, creates waste, requires highly skilled labor, and is prone to human error, which can lead to inconsistencies in the final product quality.

It is thus an object of the present invention to provide an optimized solution for automating the process of providing a patching sheet as much as possible.

This object is achieved by a method for manufacturing a patching sheet for a pressing station of a cardboard processing machine, the method comprising the following steps: First, a job recipe is obtained, which defines a model layout of creases to be applied to a sheet in the cardboard processing machine, creating a sheet of blanks. Next, the blanks are creased in the pressing station according to this model layout, resulting in a trial sheet with creases corresponding to those in the model layout. An imaging system then records an image of the creases in the trial sheet, with their locations defined by the model layout. Based on this image, the quality of each crease is assessed to identify defective creases that need correction. For each defective crease, the method determines the thickness of a patch to be applied to the patching sheet and generates a list of patches. Finally, the patching sheet is constructed according to this list of patches.

The invention is based on the idea to automate the process of patching by preparing an image of the trial sheet and determining the patches which need to be applied on the patching sheet by checking the quality of the creases. The model layout is used to determine where the creases are located on the sheet of blanks. The resulting list of patches can then be applied onto the patching sheet in a fully or partially automated fashion such that also no personnel is required for building the patching sheet or less experienced personnel can reliably build the patching sheet.

The cardboard processing machine especially is a creasing machine and the pressing station especially is a creasing station.

The job recipe can be configured by an operator, or can be loaded from a local recipe repository or from a recipe repository stored in a cloud computing unit like a cloud server. By loading the job recipe from a local or cloud-based repository, the method can be further automated.

Of course, if need be, a job recipe loaded from such a repository can further be adapted by an operator in view of a desired model layout.

The term 'defective crease' denotes a crease which does not correspond to the desired crease defined by the model layout of cuts. The defective crease can be defective over the full length of the defective crease according to the model layout or can also be a defective crease section of the respective crease.

The imaging system can be integrated in the cardboard processing machine or can be an external device. By integrating the imaging system in the cardboard processing machine, the manufacturing process of the patching sheet can be more easily further automated, while an external imaging system increases the flexibility in using the imaging system. E.g., the same imaging system might be used in combination with a plurality of cardboard processing machines.

The imaging system comprises a 3D scanning unit and the image is measured as a 3D profile of the trial sheet. The three-dimensional information about the trial sheet allows us to obtain an especially precise image containing the required information on the presence and quality of the creases in the trial sheet.

To further improve the quality of the image obtained by the imaging system, a structured light pattern can be projected by at least one light source of the 3D scanning unit on the trial sheet and can be measured after interaction with the trial sheet by at least two cameras of the 3D scanning unit.

The structured light pattern can comprise a pseudo-random pattern or a set of parallel lines, especially of equidistant parallel lines. Corresponding light sources for 3D scanning units are commercially available and provide a reliable structured light pattern, thereby further improving the quality of the measured image.

The 3D profile can be determined by triangulation based on the individual camera images measured by the at least two cameras of the 3D scanning unit.

The structured light pattern can be projected on the front side of the trial sheet or on the back side of the trial sheet. If the front side is used, the 3D profile corresponds to a measurement of the groove depth of the creases. If the back side is used, the 3D profile corresponds to a measurement of the bump height of the creases.

The 'front side' is defined as the side into which creasing tools of the pressing station penetrate into the blank, while the 'back side' is the side of the crease being opposite thereto.

To avoid or at least minimize the size of shaded areas in the image measured by the 3D scanning unit, the structured light pattern can be projected onto the trial sheet by at least two different light sources of the 3D scanning unit from different directions.

The at least two different light sources can use the same structured light pattern or different structure light patterns.

It is also possible that several 3D profiles of the trial sheet are measured one after the other, with different 3D profiles obtained by projecting a structured light pattern from different light sources. In this way, interference of the structured light patterns from different light sources can be minimized and evaluation of the data obtained by the at least two cameras of the 3D scanning unit is simplified.

To further increase the reliability of identifying defective creases in the trial sheet, computing the quality of each crease in the trial sheet whose position is defined in the model layout can comprise aligning the measured image of the creases in the trial sheet with the model layout of creases. In this way, errors emanating, e.g., from unwanted rotations or shifts of the trial sheet during measurement by the imaging system can be compensated for.

Aligning the measured image of the creases in the trial sheet with the model layout of creases can be based on a 2D motion model including translation, rotation and/or scale parameters.

Computing the quality of each of the creases in the trial sheet comprises computing a score that represents the quality of the respective crease, and comparing the score with a threshold value is indicative of whether a crease is defective or not defective.

The score is calculated based on the depth of each crease. It can be proportional to the difference between the desired depth, which ensures the proper folding behaviour of the cardboard, and the actual depth of the crease in the trial sheet.

The actual depth or actual height can be determined from the image obtained by the 3D scanning unit.

For further improving the reliability in determining the quality of the creases, the score can be calculated individually for each pixel in the image representing a part of the respective crease.

The threshold value can be a pre-defined threshold value or can be calculated based on the measurement data. E.g., a median value of individual pixels in the image representing the crease can be calculated and the threshold value can be based on a deviation from said median value.

Computing the quality of a crease in the trial sheet may comprise aggregating the scores, or the thresholded scores, into the list of defective creases, the list of defective creases including the scores, a position and a length of segments of the defective creases needing correction. In this way, in addition to the thickness of the patches to be applied on the patching sheet, the list of defective creases further provides information on where the patches are to be applied and how large they should be along the paper plane of the patching sheet.

The score can be calculated on a cloud computing unit being configured for bi-directional data communication with the imaging system and/or the cardboard processing machine. This allows for further automation of the manufacturing process of the patching sheet, as the score is obtained in the cloud computing unit. Further, the computing capabilities of the imaging system and/or of the cardboard processing machine can be lowered, as the calculation of the score can be realized in the external cloud computing unit like a cloud server, thereby collecting data that can be used to improve the method over time.

The data obtained in the imaging unit can be sent to and received by the cloud computing unit such that the cloud computing unit has the data available necessary to calculate the score.

Of course, in general it is also possible that the score is calculated on a local computing unit of the imaging system and/or of the cardboard processing machine.

It is also possible that the cloud computing unit is used in or for further steps of the method for manufacturing the patching sheet. E.g., the same cloud computing unit may provide the job repository from which the job recipe is obtained, i.e. the job recipe defining the model layout of cuts can be sent by the cloud computing unit and received by the cardboard processing machine.

Determining, for each defective crease, a thickness of a patch to be applied on the patching sheet can be based on the scores, the length of the segments or a combination of both. That is, the thickness of each patch which is to be applied on the patching sheet can be combined with the further information on the crease to obtain an optimal patching scheme.

In one variant, building the patching sheet comprises (i) placing a patching sheet precursor on a table of a digital inspection assembly, (ii) projecting, by a projection device of the digital inspection assembly, an image of each patch from the list of patches on the patching sheet precursor including an indicator representative for the thickness of the respective patch, and (iii) attaching, for each image, a physical patching strip corresponding to the indicator on the patching sheet precursor.

The indicator can be a colour, a numeric representation of the thickness, a name or a combination thereof. E.g., the indicator may be a colour which allows for an especially easy identification of the type and size of the physical patching strip(s) to be applied on the patching sheet precursor.

The colour(s) used as an indicator can correspond to colour(s) used to colour-code different thickness values of commercially available patching tapes. In this way, errors in applying the correct patching strip can be further minimized.

Attaching the physical patching strip(s) can be done by an operator or by a robot.

Since the indicator shows where each type of physical patching strip should be applied on the patching sheet precursor, it becomes particularly easy to replicate the pattern on the patching sheet precursor. This simplifies the process of applying the correct type of patching strip in the desired locations, enabling less experienced personnel to operate and construct the patching sheet with high accuracy and speed.

Alternatively, the process of manufacturing the patching sheet can be further automated by applying the patching strips by a robot which is configured to detect the image of each patch including the associated indicator and to attach the physical patching strip according to the associated indicator.

In another variant, building the patching sheet comprises (i) printing a patching sheet precursor, the printed patching sheet precursor comprising an image of each patch from the list of patches including an indicator representative for the thickness of the respective patch, and (ii) attaching, for each image, a physical patching strip corresponding to the indicator on the patching sheet precursor. In this variant, the complexity of devices needed for building the patching sheet can be reduced, as only a printer configured for printing the patching sheet precursor has to be provided.

In yet another variant, building the patching sheet comprises (i) placing a patching sheet precursor on a table of an additive manufacturing printing assembly, and (ii) printing the patches on the patching sheet precursor according to the list of patches by an additive manufacturing technique. This allows to further automate the manufacturing process, as the additive manufacturing printing assembly can operate with as less interaction with an operator as possible. Furthermore, precision of the applied patches can be further improved and also unusual sizes of patches can easily be reproduced on the patching sheet precursor by three-dimensional printing which can be realized by additive manufacturing techniques.

The object of the invention is further solved by a cardboard processing system comprising a cardboard processing machine with a pressing station for creasing blanks, the cardboard processing system being configured to perform the method of any of the preceding claims.

The features and advantages of the method for manufacturing a patching sheet according to the invention apply for the cardboard processing system, according to the invention too, and vice versa, and it is referred to the explanations given above.

The cardboard processing machine is a (cutting and) creasing machine and the pressing station is a creasing (and cutting) station.

The cardboard processing system can comprise a job recipe management system, which is configured to obtain a model layout of creases to be applied in the pressing station in a blank based on a job recipe.

The job recipe can be stored locally in the cardboard processing system, e.g. in the job recipe management system itself, or in a cloud computing system which is configured for bi-directional data communication with the cardboard processing machine.

The cardboard processing system may further comprise an imaging system for measuring an image of creases applied in blanks being processed by the cardboard processing machine.

The imaging system may be integrated into the cardboard processing machine or may be a separate device.

The cardboard processing system can further include a patching determination system configured to determine the thickness of a patch to be applied on a patching sheet for correcting for defective creases in the trial sheet.

In one variant, the cardboard processing system comprises a digital inspection assembly which is configured to project an image of one or more patches onto a patching sheet precursor.

In a further variant, the cardboard processing system comprises an additive manufacturing assembly being configured for printing patches on a patching sheet precursor by an additive manufacturing technique.

Further features and properties of the invention become more apparent from the following description of exemplary embodiments, which are not to be understood as limiting, and the appended Figures. In the Figures:
- Fig. 1 shows a cardboard processing system according to the invention;
- Fig. 2 shows a model layout of creases and cuts to be applied in a blank in the cardboard processing system of Fig. 1;
- Fig. 3 shows selected parts of an imaging system of the cardboard processing system of Fig. 1;
- Fig. 4 shows a patching sheet for the cardboard processing system of Fig. 1;
- Fig. 5 shows a digital inspection assembly of the cardboard processing system of Fig. 1; and
- Fig. 6 shows a block scheme of a method for manufacturing a patching sheet according to the invention.

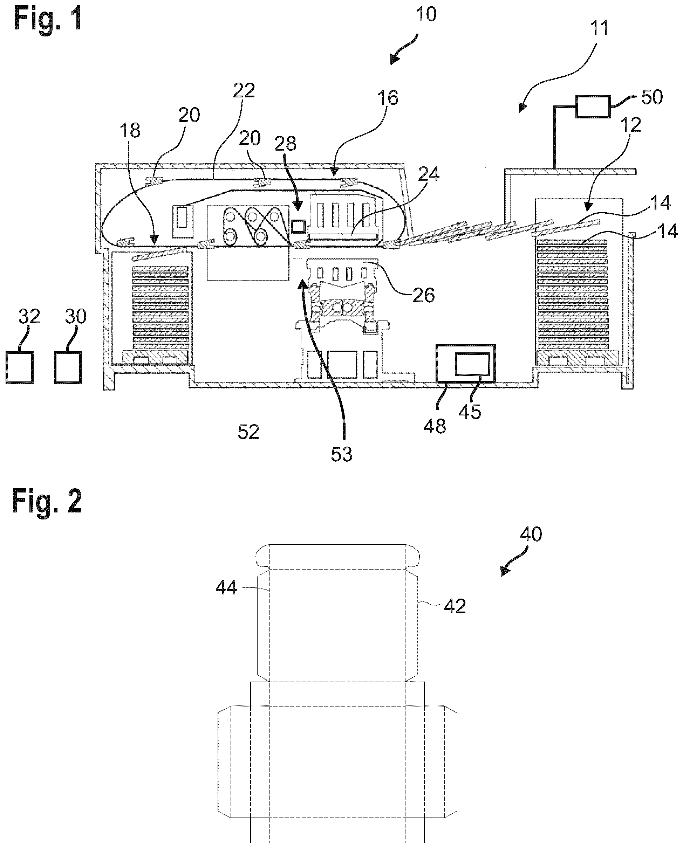

Fig. 1 shows a cardboard processing system 10 comprising a cardboard processing machine 11, in particular a creasing machine.

The cardboard processing machine 11 comprises a feeding station 12 in which cardboard blanks 14, in the following also referred to as 'blanks' 14, to be processed are piled.

Further, the cardboard processing machine 11 comprises a pressing station 16 in which the blanks 14 are creased and optionally cut. Thus, the cardboard processing machine 11 can also be a combined die-cutting and creasing machine.

In a piling station 18, the cardboard blanks 14 can be piled before they are withdrawn from the cardboard processing machine 11.

The cardboard blanks 14 can be moved along a processing direction by means of gripper bars 20, which are attached to a drive chain 22.

Pressing station 16 comprises an upper platen 24 and a lower platen 26. The upper platen 24 is arranged above the lower platen 26. The platens 24, 26 are moveable towards each other to crease, and optionally cut, a blank 14 positioned between the platens 24 and 26. In the exemplary embodiment, the upper platen 24 is fixed and the lower platen 26 is moveable.

To crease or to crease and cut the blanks 14, a tooling plate carrying creasing rules for creasing the blanks 14 and optionally carrying knives for cutting the blanks 14 may be attached to the upper platen 24 or the lower platen 26.

To the other platen 24 and 26, an optional tooling plate with slots or grooves corresponding to the knives and/or creasing rules is attached.

The tooling plates are exchangeable since different tooling plates are necessary for different production jobs.

The cardboard processing machine 11 further comprises an imaging system 28 which will be explained in more detail later on.

In the embodiment shown in Fig. 1, the imaging system 28 is integrated in the cardboard processing machine 11. However, it is also possible that the imaging system 28 is a separate device of the cardboard processing system 10.

The cardboard processing system 10 further comprises a digital inspection assembly 30 and an additive manufacturing printing assembly 32.

Coming back to the pressing station 16, the pressure applied by the platen 24 and 26 to the blank 14 must be as uniform as possible to achieve a high quality of the creasing and/or cutting process in the pressing station 16. To ensure an accurate crease and/or cut, the accuracy of a distance between the platens 24 and 26 during a pressing process needs to be in the range of a few tens of micrometers.

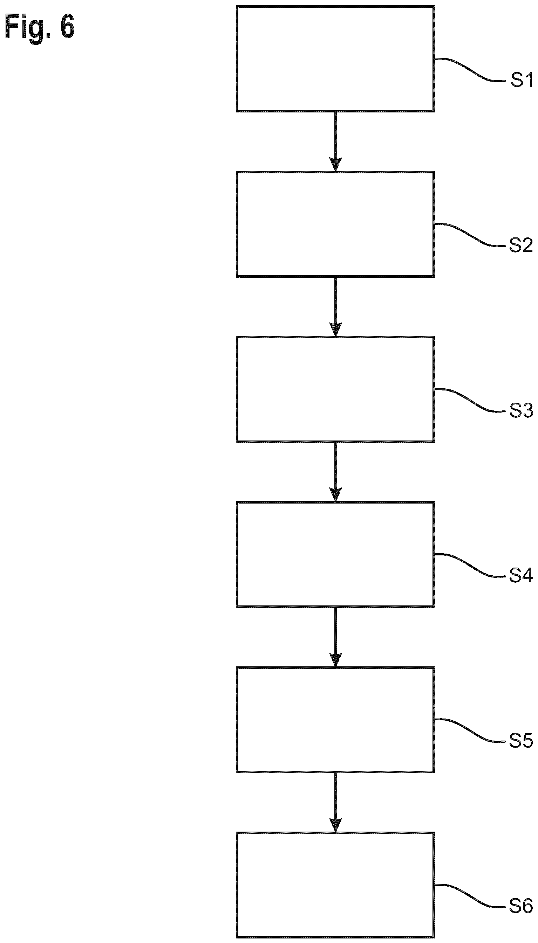

However, due to variations in material properties, machine settings, wear of the creasing rules or knives and/or other parts of the pressing station 16, possible unevenness between the upper platen 24 and the lower platen 26 needs to be compensated. For this purpose, it is known to introduce a patching sheet 34 into one of the platen 24 and 26, the patching sheet 34 comprising patches 36 which locally increase the thickness such to compensate for insufficient contact between the creasing rules and/or knives and the blank 14 (see Fig. 6).

The cardboard processing system 10 is configured to perform a method for manufacturing a patching sheet 34 for the pressing station 16 of the processing machine 11, which will be explained in the following.

First, a job recipe is obtained, wherein the job recipe defines a model layout 40 of creases to be applied in the blank 14, when the blank is creased in the cardboard processing machine 11 (see step 1 in Fig. 6).

An example of a model layout 40 is shown in Fig. 2, wherein full lines in Fig. 2 depict location of cuts 42 to be applied in the blank 14 and dashed lines depict the location of creases 44 to be applied in the blank 14.

Thus, in addition to the creases 44 being defined by the job recipe, the job recipe can also include additional information like a model layout of cuts. It is also possible that the job recipe contains information like the type and/or size of the blanks 14, the number of model layouts 40 to be applied per blank 14 and/or recommend machine settings for the cardboard processing machine 11 like the pressure applied by the platen 24 and 26.

In the example shown in Fig. 2, the model layout 40 defines a cardboard box which can be formed after extracting a respective box precursor from the processed blank 14, e.g. in a blanking operation. The box precursor is then folded along the creases 44 to form the cardboard box.

Of course, the model layout 40 shown in Fig. 2 is only an example and the method according to the invention is not limited to such kind of model layouts 40.

The job recipe can be obtained from a local recipe repository 45 stored in a local controlling and memory unit 48 or from a cloud computing unit 50 of the cardboard processing system 10, wherein the cloud computing unit 50 is configured for bi-directional communication with the cardboard processing machine 11.

The connection between the cloud computing unit 50 and the cardboard processing machine 11 can be a wired and/or a wireless connection.

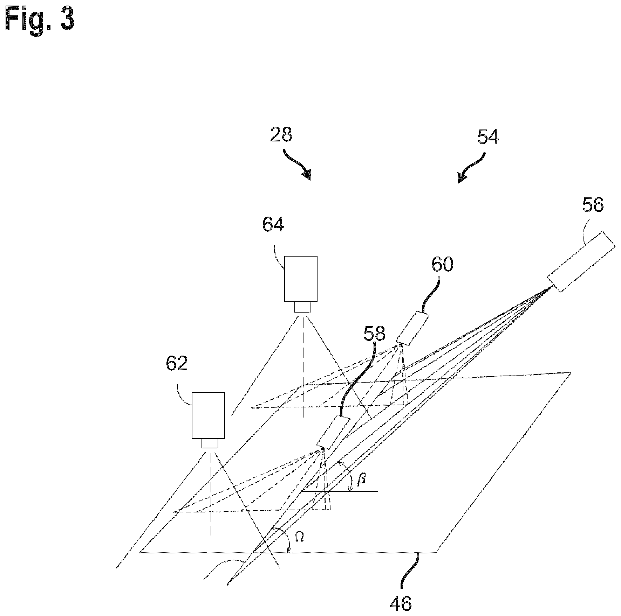

Based on the model layout 40, a blank 14 is creased in the pressing station 16 to obtain a trial sheet 46 (see Fig. 3 and step S2 in Fig. 6). The trial sheet 46 comprises creases each of which correspond to one of the creases 44 defined by the model layout 40.

Depending on how well the pressing station 16 of the cardboard processing machine 11 corresponds to the intended mode of action, the creases in the trial sheet 46 will be of the desired quality or be of lower quality. E.g., a given crease in the trial sheet 46 might be too shallow to allow for folding parts of a box precursor along the respective crease to obtain the desired cardboard box or only parts of a given crease in the trial sheet 46 actually has a sufficient depth to allow for the intended folding procedure.

Termed differently, the trial sheet 46 is a physical testing model for how uniform the pressing station 16 operates at the time the trial sheet 46 is produced, and therefore can serve as a basis for evaluating if a patching sheet 34 is needed to ensure a good quality of processed blanks 14 and what kind of patches 36 need to applied on said patching sheet 34.

According to the invention, the quality of the trial sheet 46 is assessed based on an image of the creases in the trial sheet 46. For this purpose, an image of the creases in the trial sheet 46 is measured by the imaging system 28 (see step S3 in Fig. 6).

For taking the image, the trial sheet 46 is moved along the processing direction of the cardboard processing machine 11 through the imaging system 28. In the shown embodiment, the imaging system 28 comprises a 3D scanning unit 54.

The 3D scanning unit 54 comprises a plurality of light sources 56, 58 and 60, each of which is configured to project a structured light pattern onto the trial sheet 46.

The structured light pattern might be a pseudo-random pattern or a set of parallel lines, e.g. a set of blue equidistant parallel lines.

The light source 56 and the light sources 58 and 60 project their respective structured light pattern from different directions such to avoid shadow areas in the images obtained in the 3D scanning unit 54.

Of course, the 3D scanning unit can comprise less or more light sources than shown in Fig. 3.

Each of the projected structural light patterns interact with the trial sheet 46 and is at least partially reflected from the trial sheet 46. The reflected light is detected by at least two cameras 62 and 64 of the 3D scanning unit 54, which are spaced apart from each other along the trial sheet 46.

The individual images measured by the cameras 62 and 64 are different from each other based on the surface structure of the trial sheet 46. E.g., if the light sources 56, 58 and 60 illuminate the front side of the trial sheet 46, the images obtained by the cameras 62 and 64 will be influenced by groove depths formed by the creases, and optionally by the cuts, in the trial sheet 46. If the light sources 56, 58 and 60 illuminate the back side of the trial sheet 46, the images obtained by the cameras 62 and 64 will be influenced by bump heights formed by the creases, and optionally by the cuts, in the trial sheet 46.

From the images, the type of structured light used, the positions of the light sources 56, 58 and 60 and the positions of the cameras 62 and 64, the image of the trial sheet 46 can be reconstructed, e.g. by triangulation. This reconstruction can be done on a computing unit of the imaging system 28 itself, in the local controlling and memory unit 48 or in the cloud computing unit 50.

Based on the image measured in the imaging system 28, each crease 44 in the model layout 40 is compared with the associated crease in the trial sheet 46 (see step S4 in Fig. 6). The model layout is used to determine the location of each crease on the trial sheet 46.

The computation of the quality of the creases can first include aligning the measured image of the creases in the trial sheet 46 with the model layout of creases, e.g. based on a two-dimensional motion model based on which the measured image can be compensated for errors emanating from a translated or rotated trial sheet 46 when measuring the image.

Further, the computation of the quality of the creases can include calculating, for each of the creases in the trial sheet 46, a score that represents the quality of the respective crease, and comparing the score with a threshold value being indicative for whether a crease is defective or not defective.

The threshold can be a pre-defined threshold value or can be calculated based on a median value of individual pixels in the image representing a respective crease.

It is also possible that the score is calculated individually for each pixel in the measured image representing a part of a crease such that a spatially-resolved evaluation of the respective crease is possible.

Based on the computation, a list of defective creases is obtained, wherein said list denotes each of the creases in the trial sheet 46 which do not sufficiently correspond to the desired creases 44.

The scores can also be aggregated into the list of defective creases such that further information about the defective creases can be combined like the position and/or the length of segments of the defective crease which are of insufficient quality.

Then, for each defective crease, a thickness of a patch 36 to be applied on the patching sheet 34 for correcting the respective defective crease is calculated to obtain a list of patches (see step S5 in Fig. 6).

The thickness of the patch 36 can be based on the scores, the length of the segments of the respective defective crease or a combination of both. E.g., a lower score can indicate that a patch 36 of higher thickness is necessary for successful correction of the crease.

The computation of the quality of the creases according to the model layout 40 and/or determining the thickness of the patches 36 can be done either in the cardboard processing machine 11 itself, e.g. in the local controlling and memory unit 48, or in the cloud computing unit 50. Relying on the cloud computing unit 50 has the advantage that the computing power of the cloud computing unit 50 can be designed independently from a given cardboard processing machine 11. E.g., the same cloud computing unit 50 can be used for a plurality of cardboard processing machines 11, which decreases the overall cost of the cardboard processing system 10 while achieving high accuracy in determining the list of patches in short time.

Finally, the patching sheet 34 is built according to the list of patches, e.g. in the digital inspection assembly 30 or the additive manufacturing printing assembly 32.

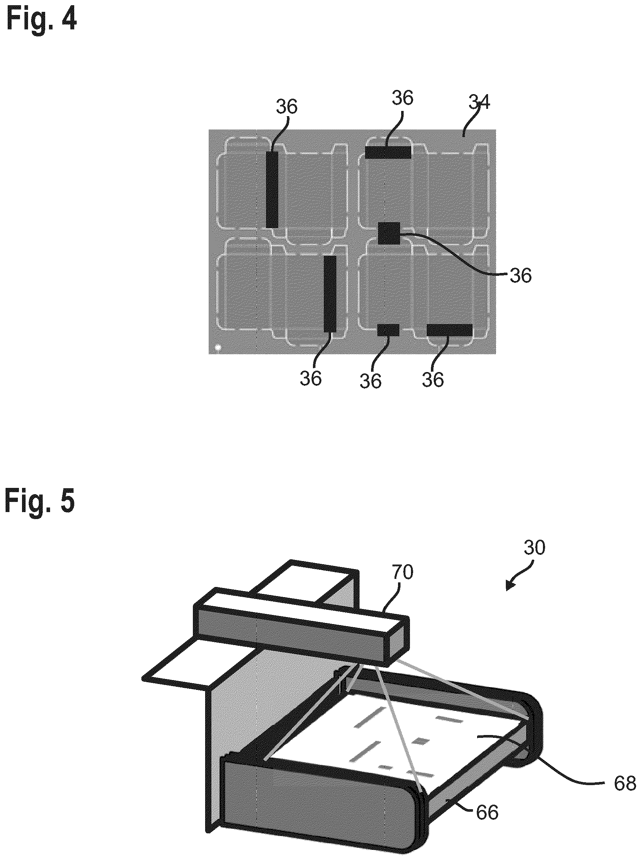

Fig. 5 shows a variant of the digital inspection assembly 30, in which the digital inspection assembly 30 comprises a table 66 onto which a patching sheet precursor 68 is placed, and a projection device 70.

The patching sheet precursor 68 can be a sheet of paper on which the patches 36 need to be applied to form the desired patching sheet 34.

The projection device 70 is configured to project an image onto the patching sheet precursor 68 for each of the patches 36 from the list of patches, wherein the image is representative for the position and the size of the patch 36 to be applied.

The image also includes an indicator for the type of patch, e.g. a colour, a numeric representation of the necessary thickness, a name of the type of patch to be applied or a combination thereof.

Thus, an operator only needs to attach, for each image projected by the projection device 70, a corresponding physical patching strip to form the desired patches 36 on the patching sheet precursor 68 such to build the patching sheet 34.

It is also possible that instead of an operator, the physical patching strips are applied by a robot which is configured to detect the images projected onto the patching sheet precursor 68 by the projection device 70.

Alternatively, the patching sheet precursor 68 may be printed, with the printed patching sheet precursor 68 comprising an image of each patch from the list of patches including the indicator representative of the thickness of the respective patch. Then, an operator or a robot can apply the physical patching strips based on the images printed on the patching sheet precursor 68. In this way, it is not necessary to provide the digital inspection assembly 30 and/or the additive manufacturing printing assembly 32 in the cardboard processing system 10.

When the additive printing assembly 32 is to be used for building the patching sheet 34, the patching sheet precursor 68 is first placed on a table of the additive printing assembly 32 and the patches 36 are 3D-printed by an additive manufacturing technique onto the patching sheet precursor 68.

In the variant shown in Fig. 1, the cardboard processing system 10 comprises both a digital inspection assembly 30 and an additive manufacturing printing assembly 32, thereby offering greater flexibility in how the patching sheet 34 is built. However, the cardboard processing system 10 can also include only one of the digital inspection assembly 30 and the additive manufacturing printing assembly 32 or none of both in case another option is used to build the patching sheet 34.

Overall, the method for preparing the patching sheet 34 and the cardboard processing system 10 enables to further automate the process of manufacturing patching sheets 34 and reduce human error and downtimes of the cardboard processing machine 11.

## Claims

1. A method for manufacturing a patching sheet (34) for a pressing station (16) of a cardboard processing machine (11), the method comprising the following steps:
- obtaining a job recipe, the job recipe defining a model layout (40) of creases (44) to be applied in a blank (14) being creased in the cardboard processing machine (11);
- creasing a sheet of blanks (14) in the pressing station (16) of the cardboard processing machine (11) according to the model layout (40) to obtain a trial sheet (46) comprising creases, each of the creases in the trial sheet (46) being associated to one of the creases (44) of the model layout (40);
- measuring, by an imaging system (28), an image of the creases in the trial sheet (46); the location of said creases (44) being defined by the model layout (40);
- computing, based on the measured image, the quality of each crease (44) in the trial sheet (46) to obtain a list of defective creases needing correction;
- determining, for each defective crease, the thickness of a patch (36) to be applied on the patching sheet (34) for correcting the defective crease to obtain a list of patches; and
- building the patching sheet (36) according to the list of patches.

2. The method according to claim 1, wherein the imaging system (28) comprises a 3D scanning unit (54) and the image is measured as a 3D profile of the trial sheet (46).

3. The method according to claim 2, wherein a structured light pattern is projected by at least one light source (56, 58, 60) of the 3D scanning unit (54) onto the trial sheet (46) and is measured after interaction with the trial sheet (46) by at least two cameras (62, 64) of the 3D scanning unit (54).

4. The method according to claim 3, wherein the structured light pattern comprises a pseudo-random pattern or a set of parallel lines.

5. The method according to any one of claims 2 to 4, wherein the structured light pattern is projected onto the trial sheet (46) by at least two different light sources (56, 58, 60) of the 3D scanning unit (54) from different directions.

6. The method according to any one of the preceding claims, wherein the computation of the quality of each crease (44) in the trial sheet (46) comprises aligning the measured image of the creases in the trial sheet (46) with the model layout (40) of creases (44).

7. The method according to any one of the preceding claims, wherein the computation of the quality of each crease (44) in the trial sheet (46) comprises calculating, for each of the creases in the trial sheet (46), a score that represents the quality of the respective crease, and comparing the score with a threshold value being indicative for whether a crease is defective or not defective.

8. The method according to claim 7, wherein the score is proportional to the difference between a desired depth of the respective crease being sufficient for the desired folding behavior of the respective crease and the actual depthof the respective crease in the trial sheet (46).

9. The method according to claim 7 or 8, wherein computing the quality of each crease in the trial sheet (46) further comprises aggregating the scores into the list of defective creases, the list of defective creases including the scores, a position and a length of segments of the defective creases needing correction.

10. The method according to any one of claim 7 to 9, wherein the score is calculated on a cloud computing unit (50) being configured for bi-directional data communication with the imaging system (28) and/or the cardboard processing machine (11).

11. The method according to claim 9 or 10, wherein determining, for each defective crease, a thickness of a patch (36) to be applied on the patching sheet (34) is based on the scores, the length of the segments or a combination of both.

12. The method according to any of the preceding claims, wherein building the patching sheet (34) comprises (i) placing a patching sheet precursor (68) on a table (66) of a digital inspection assembly (30), (ii) projecting, by a projection device (70) of the digital inspection assembly (30), an image of each patch (36) from the list of patches on the patching sheet precursor (68) including an indicator representative for the thickness of the respective patch, and (iii) attaching, for each image, a physical patching strip corresponding to the indicator on the patching sheet precursor (68).

13. The method according to any one of claims 1 to 11, wherein building the patching sheet (34) comprises (i) printing a patching sheet precursor (68), the printed patching sheet precursor (68) comprising an image of each patch (36) from the list of patches including an indicator representative for the thickness of the respective patch, and (ii) attaching, for each image, a physical patching strip corresponding to the indicator on the patching sheet precursor (68).

14. The method according to any one of claims 1 to 11, wherein building the patching sheet (34) comprises (i) placing a patching sheet precursor (68) on a table of an additive manufacturing printing assembly (32), and (ii) printing the patches (36) on the patching sheet (68) precursor according to the list of patches by an additive manufacturing technique.

15. A cardboard processing system (10) comprising a cardboard processing machine (11) with a pressing station (16) for creasing blanks (14), the cardboard processing system (10) being configured to perform the method of any of the preceding claims.
